# EUROPEAN PATENT APPLICATION

(11) **EP 1 992 674 A1**
(43) Date of publication of application: **19.11.2008**
(21) Application number: 07107741.6
(22) Date of filing: 08.05.2007
(51) Int. Cl.: C10L 1/02, C10L 1/16, C10L 10/14

(54) **Diesel fuel compositions comprising a gas oil base fuel, a fatty acid alkyl ester and an aromatic component**

(71) Applicant: SHELL INTERNATIONALE RESEARCH MAATSCHAPPIJ B.V., 2596 HR Den Haag (NL)
(72) Inventor: Brewer Mark Lawrence, Chester CH2 4NU (GB)

(57) **Abstract**

A fuel composition comprising a gas oil base fuel, a fatty acid alkyl ester and one or more additional components, each of which components contains one or more aromatic constituents; and a method of reducing the phase separation temperature of a fuel composition comprising a gas oil base fuel and a fatty acid alkyl ester.

## Description

The present invention relates to fuel compositions comprising a gas oil base fuel, particularly to such compositions containing a fatty acid alkyl ester (FAAE), and to their preparation and use.

It is known to blend together two different fuel components so as to modify the properties and/or the performance, e.g. engine performance, of the resultant composition.

Known diesel fuel components include the so-called "biofuels" which derive from biological materials. Examples include fatty acid alkyl esters.

Current commercially available compression ignition (diesel) engines tend to be optimised to run on fuels having a desired specification. Moreover, the conditions under which the engine is required to operate can affect the manner in which a fuel composition in the engine will behave. In particular, as the atmospheric temperature falls, a fuel that is a single-phase homogeneous liquid at normal temperatures may become a multiphase liquid as certain components either (i) freeze (forming solid wax) or (ii) become immiscible in the bulk liquid and form a separate liquid layer. The onset of wax formation on cooling is characterised by a change in the transparency of the fuel and the temperature at which this occurs is termed the "Cloud Point" of the fuel. If, on cooling, the Cloud Point is preceded by the formation of a separate liquid phase, the temperature at which this occurs is termed the "Phase separation temperature". Diesel fuel specifications such as ASTM D975-02 (USA) include limits on Cloud Point temperature and EN590 (Europe) includes limits on Cold Filter Plugging Point (CFPP), in order to ensure that diesel fuel remains fluid at the lowest anticipated service temperature and that blocking of fuel filters by wax is prevented. For trouble free operation, it is also desirable that the diesel fuel in the fuel tank remains homogeneous, since the composition of some or all of any separated liquid layers may be unsuitable as a fuel for the engine. The blending of a standard commercial diesel base fuel with other fuel components, to modify the overall fuel properties and/or performance, can therefore have an adverse impact on the performance of the blend in the engines for which it is intended.

For example, Swedish Class 1 diesel fuel has good low temperature properties. Environmental pressure is resulting in the inclusion of FAAEs in such fuels. However, it has been found that this results in adverse effects on such low temperature properties, which can create problems when used in cold climates, such as for example in Scandinavia.

For the above reason, it is desirable for any diesel fuel blend to have an overall specification as close as possible to that of the standard commercially available diesel base fuels for which engines tend to be optimised.

This can, however, be difficult to achieve because any additional fuel component is likely to alter the properties and performance of the base fuel. Moreover, the properties of a blend, in particular its effect on low temperature performance, are not always straightforward to predict from the properties of the constituent fuels alone.

WO-A-2007/012585 describes that in fuel compositions comprising a gas oil base fuel and an alkyl levulinate, the phase separation temperature of the fuel composition is dependent upon the level of aromatic constituents in the base fuel. In particular, it describes that the phase separation temperature is lowered when the level of aromatic constituents is increased. It also describes that, if the level of aromatic constituents is increased, the amount of alkyl levulinate that can be incorporated in a homogeneous mixture is increased.

As described below, FAAEs contain long chain carboxylic acid molecules (generally from 10 to 22 carbon atoms long), each having an alcohol molecule attached to one end. This differs from alkyl levulinates, which are structurally quite different from FAAEs, for example in that they have much shorter chain lengths and contain a keto group.

It has now surprisingly been found that, despite the quite different structure of FAAEs as compared to alkyl levulinates, in fuel compositions comprising a gas oil base fuel and an FAAE, the phase separation temperature of the fuel composition is dependent upon the level of aromatic constituents in the base fuel. In particular, the phase separation temperature is lowered when the level of aromatic constituents is increased. Moreover, at a particular temperature, if the level of aromatic constituents is increased, the amount of a fatty acid alkyl ester that can be incorporated in a homogeneous mixture is increased.

In accordance with the present invention there is provided a fuel composition comprising a gas oil base fuel, a fatty acid alkyl ester and one or more additional components, each of which components contains one or more aromatic constituents.

In accordance with the present invention there is also provided a method of reducing the phase separation temperature of a fuel composition comprising a gas oil base fuel and a fatty acid alkyl ester, which method comprises increasing the level of aromatic constituents in the fuel composition, preferably by incorporating in the fuel composition one or more additional components, each of which components contains one or more aromatic constituents.

In accordance with the present invention there is further provided use in a fuel composition comprising a gas oil base fuel and a fatty acid alkyl ester of one or more additional components, each of which components contains one or more aromatic constituents, for the purpose of reducing the phase separation temperature of the fuel composition

In accordance with the present invention there is still further provided a method of operating a compression ignition engine and/or a vehicle which is powered by such an engine, which method comprises introducing into a combustion chamber of the engine a fuel composition according to the present invention.

In accordance with the present invention there is still further provided a method of operating a heating appliance provided with a burner, which method comprises supplying to said burner a fuel composition according to the present invention.

In accordance with the present invention there is still further provided a process for the preparation of a fuel composition which process comprises blending a gas oil base fuel, a fatty acid alkyl ester and one or more additional components, each of which components contains one or more aromatic constituents.

It is known to include fatty acid alkyl esters (FAAEs), in particular fatty acid methyl esters (FAMEs), in diesel fuel compositions. An example of an FAAE included in diesel fuels is rapeseed methyl ester (RME). FAAEs are typically derivable from biological sources and may be added for a variety of reasons, including to reduce the environmental impact of the fuel production and consumption process or to improve lubricity.

The FAAE will typically be added to the fuel composition as a blend (i.e. a physical mixture), conveniently before the composition is introduced into an internal combustion engine or other system which is to be run on the composition. Other fuel components and/or fuel additives may also be incorporated into the composition, either before or after addition of the FAAE and either before or during use of the composition in a combustion system.

The amount of FAAE added will depend on the natures of the base fuel and FAAE in question and on the target Cloud Point.

FAAEs, of which the most commonly used in the present context are the methyl esters, are already known as renewable diesel fuels (so-called "biodiesel" fuels). They contain long chain carboxylic acid molecules (generally from 10 to 22 carbon atoms long), each having an alcohol molecule attached to one end. Organically derived oils such as vegetable oils (including recycled vegetable oils) and animal fats (including fish oils) can be subjected to a transesterification process with an alcohol (typically a C₁ to C₅ alcohol) to form the corresponding fatty esters, typically mono-alkylated. This process, which is suitably either acid- or base-catalysed, such as with the base KOH, converts the triglycerides contained in the oils into fatty acid esters and free glycerol, by separating the fatty acid components of the oils from their glycerol backbone. FAAEs can also be prepared from used cooking oils, and can be prepared by standard esterification from fatty acids.

In the present invention, the FAAE may be any alkylated fatty acid or mixture of fatty acids. Its fatty acid component(s) are preferably derived from a biological source, more preferably a vegetable source. They may be saturated or unsaturated; if the latter, they may have one or more, preferably up to 6, double bonds. They may be linear or branched, cyclic or polycyclic. Suitably they will have from 6 to 30, preferably 10 to 30, more suitably from 10 to 22 or from 12 to 24 or from 16 to 18, carbon atoms including the acid group(s) -CO₂H. A FAAE will typically comprise a mixture of different fatty acid esters of different chain lengths, depending on its source. For instance the commonly available rapeseed oil contains mixtures of palmitic acid (C₁₆), stearic acid (C₁₈), oleic, linoleic and linolenic acids (C₁₈, with one, two and three unsaturated carbon-carbon bonds respectively) and sometimes also erucic acid (C₂₂) - of these the oleic and linoleic acids form the major proportion. Soybean oil contains a mixture of palmitic, stearic, oleic, linoleic and linolenic acids. Palm oil usually contains a mixture of palmitic, stearic and linoleic acid components.

The FAAE used in the present invention is preferably derived from a natural fatty oil, for instance a vegetable oil or animal fat such as rapeseed oil, soybean oil, coconut oil, sunflower oil, palmolein, palm oil, peanut oil, linseed oil, camelina oil, safflower oil, babassu oil, tallow oil, rice bran oil, jatropha oil or tall oil. It may in particular be an alkyl ester (suitably the methyl ester) of palm, rapeseed, tallow, soy or coconut oil. The FAAE can also be prepared from other inedible oils.

The FAAE is preferably a C₁ to C₅ alkyl ester, more preferably a methyl, ethyl, propyl (suitably iso-propyl)or butyl ester, yet more preferably a methyl or ethyl ester and in particular a methyl ester.

It may for example be selected from the group consisting of rapeseed methyl ester (RME, also known as rape oil methyl ester or rape methyl ester), soy methyl ester (SME, also known as soybean methyl ester), palm oil methyl ester (POME), tallow methyl ester (TME), coconut methyl ester (CME) (in particular unrefined CME; the refined product is based on the crude but with some of the higher and lower alkyl chains (typically the C₆, C₈, C₁₀, C₁₆ and C₁₈) components removed) and mixtures thereof.

In general it may be either natural or synthetic, refined or unrefined ("crude").

The FAAE may contain impurities or by-products as a result of the manufacturing process.

The FAAE suitably complies with specifications applying to the rest of the fuel composition, and/or to the base fuel to which it is added, bearing in mind the intended use to which the composition is to be put (for example, in which geographical area and at what time of year). In particular, the FAAE preferably has a flash point (IP 34) of greater than 101°C; a kinematic viscosity at 40°C (IP 71) of 1.9 to 6.0 mm²/s, preferably 3.5 to 5.0 mm²/; a density from 845 to 910 kg/m³, preferably from 860 to 900 kg/m³, at 15°C (IP 365, EN ISO 12185 or EN ISO 3675); a water content (IP 386) of less than 500 ppm; a T95 (the temperature at which 95% of the fuel has evaporated, measured according to IP 123) of less than 360°C; an acid number (IP 139) of less than 0.8 mgKOH/g, preferably less than 0.5 mgKOH/g; and an iodine number (IP 84) of less than 125, preferably less than 120 or less than 115, grams of iodine (I₂) per 100g of fuel. It also preferably contains (e.g. by gas chromatography (GC)) less than 0.2% w/w of free methanol, less than 0.02% w/w of free glycerol and greater than 96.5% w/w esters. In general it may be preferred for the FAAE to conform to the European specification EN 14214 for fatty acid methyl esters for use as diesel fuels.

Two or more FAAEs may be added to the base fuel in accordance with the present invention, either separately or as a pre-prepared blend.

The FAAE preferably comprises (i.e. either is or includes) RME or SME.

The FAAE may be added to the fuel composition for one or more purposes, for instance to reduce life cycle greenhouse gas emissions, to improve lubricity and/or to reduce costs.

In this context, "use" of a FAAE in a fuel composition means incorporating the FAAE into the composition, typically as a blend (i.e. a physical mixture) and optionally with one or more other fuel components (such as diesel base fuels) and optionally with one or more fuel additives. The FAAE is conveniently incorporated before the composition is introduced into an engine or other combustion system which is to be run on the fuel composition. Instead or in addition the use may involve running a diesel engine on the fuel composition containing the FAAE, typically by introducing the composition into a combustion chamber of the engine.

Preferably, said additional components are selected from materials which are suitable to be blended with fuel compositions, such as for example (i) a refinery product stream with an aromatic content higher than that of the base fuel, or (ii) an aromatic solvent, e.g. SHELLSOL AB (available ex. Shell companies), boiling in the normal temperature range of gas oil.

Preferably, the concentration of said additional component(s) in the fuel composition accords with one or more of the following parameters:-
(i) at least 1%m; (ii) at least 5%m; (iii) at least 10%m (iv) at least 15%m; (v) up to 25%m; (vi) up to 30%m; (vii) up to 40%m, (viii) up to 50%m, with ranges having features (i) and (viii), (ii) and (vii), (iii) and (vi), and (iv) and (v) respectively being progressively more preferred.

Preferably, the concentration of aromatic constituents in the fuel composition containing said additional component(s) accords with one or more of the following parameters:-
(i) at least 1%m; (ii) at least 5%m; (iii) at least 10%m (iv) at least 20%m; (v) up to 30%m; (vi) up to 35%m; (vii) up to 40%m, (viii) up to 50%m, with ranges having features (i) and (viii), (ii) and (vii), (iii) and (vi), and (iv) and (v) respectively being progressively more preferred.

Preferably, said phase separation temperature of said fuel composition is reduced by at least 3°C, more preferably by at least 5°C, still more preferably by at least 10°C, and most preferably by at least 20°C.

Preferably, said phase separation temperature of said fuel composition is below -5°C, more preferably below -10°C, still more preferably below -20°C, and most preferably below -30°C.

Preferably, the Cloud Point of said fuel composition is below -5°C, more preferably below -10°C, more preferably below -15°C, more preferably below -20°C, still more preferably below -25°C, and most preferably below -30°C.

In all aspects of the present invention, blends of two or more of the FAAEs may be included in the fuel composition. In the context of the present invention, selection of the particular components of said blends and their proportions is dependent upon one or more desired characteristics of the fuel composition.

The present invention may be used to formulate fuel blends which are expected to be of particular use in modern commercially available diesel engines as alternatives to the standard diesel base fuels, for instance as commercial and legislative pressures favour the use of increasing quantities of organically derived "biofuels".

In the context of the present invention, "use" of a fuel component in a fuel composition means incorporating the component into the composition, typically as a blend (i.e. a physical mixture) with one or more other fuel components, conveniently before the composition is introduced into an engine.

The fuel composition will typically contain a major proportion of the base fuel, such as from 50 to 99%v, preferably from 80 to 99%v, more preferably from 90 to 99%v, or from 50 to 98%v, preferably from 80 to 98%v, more preferably from 90 to 98%v. The proportions of the FAAEs and co-solvents will be chosen to achieve the desired degree of miscibility, i.e. phase separation temperature, and may also be influenced by other properties required of the overall composition.

The fuel compositions to which the present invention relates include diesel fuels for use in automotive compression ignition engines, as well as in other types of engine such as for example marine, railroad and stationary engines, and industrial gas oils for use in heating applications (e.g. boilers).

The base fuel may itself comprise a mixture of two or more different diesel fuel components, and/or be additivated as described below.

Such diesel fuels will contain a base fuel which may typically comprise liquid hydrocarbon middle distillate gas oil(s), for instance petroleum derived gas oils. Such fuels will typically have boiling points within the usual diesel range of 150 to 400°C, depending on grade and use. They will typically have a density from 750 to 900 kg/m³, preferably from 800 to 860 kg/m³, at 15°C (e.g. ASTM D4502 or IP 365) and a cetane number (ASTM D613) of from 35 to 80, more preferably from 40 to 75. They will typically have an initial boiling point in the range 150 to 230°C and a final boiling point in the range 290 to 400°C. Their kinematic viscosity at 40°C (ASTM D445) might suitably be from 1.2 to 4.5 mm²/s.

An example of a petroleum derived gas oil is a Swedish Class 1 base fuel, which will have a density from 800 to 820 kg/m³ at 15°C (ASTM D4502 or IP 365), a T95 of 285°C or less (ASTM D86 or IP 123) and a kinematic viscosity at 40°C (ASTM D445) from 1.2 to 4.0 mm²/s, as defined by the Swedish national specification EC1.

Such industrial gas oils will contain a base fuel which may comprise fuel fractions such as the kerosene or gas oil fractions obtained in traditional refinery processes, which upgrade crude petroleum feedstock to useful products. Preferably such fractions contain components having carbon numbers in the range 5 to 40, more preferably 5 to 31, yet more preferably 6 to 25, most preferably 9 to 25, and such fractions have a density at 15°C of 650 to 1000 kg/m³, a kinematic viscosity at 20°C of 1 to 80 mm²/s, and a boiling range of 150 to 400°C.

Kerosene fuels will typically have boiling points within the usual kerosene range of 130 to 300°C, depending on grade and use. They will typically have a density from 775 to 840 kg/m³, preferably from 780 to 830 kg/m³, at 15°C (e.g. ASTM D4502 or IP 365). They will typically have an initial boiling point in the range 130 to 160°C and a final boiling point in the range 220 to 300°C. Their kinematic viscosity at -20°C (ASTM D445) might suitably be from 1.2 to 8.0 mm²/s.

Optionally, non-mineral oil based fuels, such as bio-fuels or Fischer-Tropsch derived fuels, may also form or be present in the fuel composition. Such Fischer-Tropsch fuels may for example be derived from natural gas, natural gas liquids, petroleum or shale oil, petroleum or shale oil processing residues, coal or biomass.

The amount of Fischer-Tropsch derived fuel used in a diesel fuel composition may be from 0.5 to 100%v of the overall diesel fuel composition, preferably from 5 to 75%v. It may be desirable for the composition to contain 10%v or greater, more preferably 20%v or greater, still more preferably 30%v or greater, of the Fischer-Tropsch derived fuel. It is particularly preferred for the composition to contain 30 to 75%v, and particularly 30 or 70%v, of the Fischer-Tropsch derived fuel. The balance of the fuel composition is made up of one or more other fuels.

An industrial gas oil composition will preferably comprise more than 50 wt%, more preferably more than 70 wt%, of a Fischer-Tropsch derived fuel component.

Such a Fischer-Tropsch derived fuel component is any fraction of the middle distillate fuel range, which can be isolated from the (hydrocracked) Fischer-Tropsch synthesis product. Typical fractions will boil in the naphtha, kerosene or gas oil range. Preferably, a Fischer-Tropsch product boiling in the kerosene or gas oil range is used because these products are easier to handle in for example domestic environments. Such products will suitably comprise a fraction larger than 90 wt% which boils between 160 and 400°C, preferably to about 370°C. Examples of Fischer-Tropsch derived kerosene and gas oils are described in EP-A-0583836, WO-A-97/14768, WO-A-97/14769, WO-A-00/11116, WO-A-00/11117, WO-A-01/83406, WO-A-01/83648, WO-A-01/83647, WO-A-01/83641, WO-A-00/20535, WO-A-00/20534, EP-A-1101813, US-A-5766274, US-A-5378348, US-A-5888376 and US-A-6204426.

The Fischer-Tropsch product will suitably contain more than 80 wt% and more suitably more than 95 wt% iso and normal paraffins and less than 1 wt% aromatics, the balance being naphthenics compounds. The content of sulphur and nitrogen will be very low and normally below the detection limits for such compounds. For this reason the sulphur content of a fuel composition containing a Fischer-Tropsch product may be very low.

The fuel composition preferably contains no more than 5000ppmw sulphur, more preferably no more than 500ppmw, or no more than 350ppmw, or no more than 150ppmw, or no more than 100ppmw, or no more than 70ppmw, or no more than 50ppmw, or no more than 30ppmw, or no more than 20ppmw, or most preferably no more than 10ppmw sulphur.

In addition to the FAAEs and the above-mentioned one or more additional components, each of which components contains one or more aromatic constituents, the fuel composition of the present invention may, if required, contain one or more additives as described below.

The base fuel may itself be additivated (additive-containing) or unadditivated (additive-free). If additivated, e.g. at the refinery, it will contain minor amounts of one or more additives selected for example from anti-static agents, pipeline drag reducers, flow improvers (e.g. ethylene/vinyl acetate copolymers or acrylate/maleic anhydride copolymers), lubricity additives, antioxidants and wax anti-settling agents.

Detergent-containing diesel fuel additives are known and commercially available. Such additives may be added to diesel fuels at levels intended to reduce, remove, or slow the build up of engine deposits.

Examples of detergents suitable for use in fuel additives for the present purpose include polyolefin substituted succinimides or succinamides of polyamines, for instance polyisobutylene succinimides or polyisobutylene amine succinamides, aliphatic amines, Mannich bases or amines and polyolefin (e.g. polyisobutylene) maleic anhydrides. Succinimide dispersant additives are described for example in GB-A-960493, EP-A-0147240, EP-A-0482253, EP-A-0613938, EP-A-0557516 and WO-A-98/42808. Particularly preferred are polyolefin substituted succinimides such as polyisobutylene succinimides.

The additive may contain other components in addition to the detergent. Examples are lubricity enhancers; dehazers, e.g. alkoxylated phenol formaldehyde polymers; anti-foaming agents (e.g. polyether-modified polysiloxanes); ignition improvers (cetane improvers) (e.g. 2-ethylhexyl nitrate (EHN), cyclohexyl nitrate, di-tert-butyl peroxide and those disclosed in US-A-4208190 at column 2, line 27 to column 3, line 21); anti-rust agents (e.g. a propane-1,2-diol semi-ester of tetrapropenyl succinic acid, or polyhydric alcohol esters of a succinic acid derivative, the succinic acid derivative having on at least one of its alpha-carbon atoms an unsubstituted or substituted aliphatic hydrocarbon group containing from 20 to 500 carbon atoms, e.g. the pentaerythritol diester of polyisobutylene-substituted succinic acid); corrosion inhibitors; reodorants; anti-wear additives; anti-oxidants (e.g. phenolics such as 2,6-di-tert-butylphenol, or phenylenediamines such as N,N'-di-sec-butyl-p-phenylenediamine); metal deactivators; and combustion improvers.

The additive may contain a lubricity enhancer, especially when the fuel composition has a low (e.g. 500 ppmw or less) sulphur content. In the additivated fuel composition, the lubricity enhancer is conveniently present at a concentration of less than 1000 ppmw, preferably between 50 and 1000 ppmw, more preferably between 100 and 1000 ppmw. Suitable commercially available lubricity enhancers include ester- and acid-based additives. Other lubricity enhancers are described in the patent literature, in particular in connection with their use in low sulphur content diesel fuels, for example in:
- the paper by Danping Wei and H.A. Spikes, "The Lubricity of Diesel Fuels", Wear, III (1986) 217-235;
- WO-A-95/33805 - cold flow improvers to enhance lubricity of low sulphur fuels;
- WO-A-94/17160 - certain esters of a carboxylic acid and an alcohol wherein the acid has from 2 to 50 carbon atoms and the alcohol has 1 or more carbon atoms, particularly glycerol monooleate and di-isodecyl adipate, as fuel additives for wear reduction in a diesel engine injection system;
- US-A-5490864 - certain dithiophosphoric diester-dialcohols as anti-wear lubricity additives for low sulphur diesel fuels; and
- WO-A-98/01516 - certain alkyl aromatic compounds having at least one carboxyl group attached to their aromatic nuclei, to confer anti-wear lubricity effects particularly in low sulphur diesel fuels.

It is also preferred that the additive contain an anti-foaming agent, more preferably in combination with an anti-rust agent and/or a corrosion inhibitor and/or a lubricity additive.

Unless otherwise stated, the (active matter) concentration of each such additional component in the additivated fuel composition is preferably up to 10000 ppmw, more preferably in the range from 0.1 to 1000 ppmw, advantageously from 0.1 to 300 ppmw, such as from 0.1 to 150 ppmw.

The (active matter) concentration of any dehazer in the fuel composition will preferably be in the range from 0.1 to 20 ppmw, more preferably from 1 to 15 ppmw, still more preferably from 1 to 10 ppmw, advantageously from 1 to 5 ppmw. The (active matter) concentration of any ignition improver present will preferably be 2600 ppmw or less, more preferably 2000 ppmw or less, conveniently from 300 to 1500 ppmw.

If desired, the additive components, as listed above, may be co-mixed, preferably together with suitable diluent(s), in an additive concentrate, and the additive concentrate may be dispersed into the fuel, in suitable quantity to result in a composition of the present invention.

In the case of a diesel fuel composition, for example, the additive will typically contain a detergent, optionally together with other components as described above, and a diesel fuel-compatible diluent, which may be a carrier oil (e.g. a mineral oil), a polyether, which may be capped or uncapped, a non-polar solvent such as toluene, xylene, white spirits and those sold by Shell companies under the trade mark "SHELLSOL", and/or a polar solvent such as an ester and, in particular, an alcohol, e.g. hexanol, 2-ethylhexanol, decanol, isotridecanol and alcohol mixtures such as those sold by Shell companies under the trade mark "LINEVOL", especially LINEVOL 79 alcohol which is a mixture of C₇₋₉ primary alcohols, or a C₁₂₋₁₄ alcohol mixture which is commercially available.

The total content of the additives may be suitably between 0 and 10000 ppmw and preferably below 5000 ppmw.

Preferably, the fatty acid alkyl ester concentration in the fuel composition accords with one or more of the following parameters:-
(i) at least 1%v; (ii) at least 2%v; (iii) at least 3%v; (iv) at least 4%v; (v) at least 5%v; (vi) up to 6%v; (vii) up to 8%v; (viii) up to 10%v, (xi) up to 12%v, (x) up to 35%v, with ranges having features (i) and (x), (ii) and (ix), (iii) and (viii), (iv) and (vii), and (v) and (vi) respectively being progressively more preferred. The range having features (v) and (viii) is also preferred.

In this specification, amounts (concentrations, %v, ppmw, wt%) of components are of active matter, i.e. exclusive of volatile solvents/diluent materials.

The present invention is particularly applicable where the fuel composition is used or intended to be used in a direct injection diesel engine, for example of the rotary pump, in-line pump, unit pump, electronic unit injector or common rail type, or in an indirect injection diesel engine. The fuel composition may be suitable for use in heavy and/or light duty diesel engines.

As mentioned above, it is also applicable where the fuel composition is used in heating applications, for example boilers. Such boilers include standard boilers, low temperature boilers and condensing boilers, and are typically used for heating water for commercial or domestic applications such as space heating and water heating.

The present invention may lead to any of a number of advantageous effects, including good engine low temperature performance.

The present invention will now be further described by reference to the following Examples, in which, unless otherwise indicated, parts and percentages are by weight, and temperatures are in degrees Celsius:

Fuels were blended with additives by adding said additives to base fuel at ambient temperature (20°C) and homogenising.

The following additives were used:-
palm oil methyl ester (POME;
rapeseed methyl ester (RME);
tallow methyl ester (TME);
soy methyl ester (SME); and
coconut oil methyl ester (CME).

### Examples

The base fuel tested was a Swedish Class 1 AGO, which is a low density, low aromatics (4%m) diesel fuel with a cloud point of -35.1°C. This base fuel met the EN590 specification.

The properties of the base fuel are given in Table 1, together with the specification for Swedish Class I AGO:

**Table 1**

| | Fuel | Specification |
|---|---|---|
| Density @ 15°C, kg/m³ | 815 | 800-820 |
| Initial boiling point, °C | - | ≤180 |
| Distillation T50, °C | 235 | - |
| Distillation T95, °C | 272 | ≤285 |
| Viscosity @40°C, mm²/s | 2.03 | 1.2-4.0 |
| Sulphur, mg/kg | <5 | ≤10 |
| Cloud Point, °C | -35.1 | ≤-16 |
| CFPP, °C | -36.0 | ≤-26 |
| Aromatics, %m | 4 | ≤5 |

The miscibility of various FAAEs was measured in terms of "Cloud Point" (in accordance with IP219).

A sample of fuel (40 ml) was cooled from ambient temperature (20°C) in a series of thermostat baths maintained at progressively lower temperatures. The sample was examined at 1°C intervals as it cooled to its wax cloud point. Other methods also can be used to determine Cloud Point.

Solutions of the esters POME, RME, TME, SME and CME (which can be referred to as fatty acid methyl esters (FAMEs)) were blended into the base fuel at various concentrations, together with various concentrations of an aromatic solvent "SHELLSOL AB" (ex. Shell), and the miscibility of each blend was measured, in terms of the Cloud Point. The results are shown in Table 2 below:

**Table 2**

| SHELLSOL AB | 2% POME | 5% POME | 5% RME | 2% TME | 5% TME | 5% SME | 5% CME |
|---|---|---|---|---|---|---|---|
| 0% | -31.5 | -21.6 | -30.8 | -30.4 | -22.5 | nd | nd |
| 5% | nd | -23.9 | -34.2 | nd | -23.1 | -32.5 | -32.5 |
| 10% | nd | -24.5 | -35.2 | nd | -24.4 | -33.9 | -33.7 |
| 15% | nd | -26.3 | -35.9 | nd | -25.8 | -34.9 | -34.7 |
| 20% | -34.7 | -25.3 | -36.9 | -35.0 | -26.4 | -36.0 | -35.8 |

| | | | | | | | |
|---|---|---|---|---|---|---|---|
| nd = not determined | | | | | | | |

It is shown in Table 2 that when the aromatic content was increased by adding the solvent "SHELLSOL AB" (ex. Shell), the cloud point was lowered, or generally lowered, throughout the range of concentrations of each FAME.

Low temperature stability can be measured by storing a sample isothermally for prolonged periods (e.g. 24 hours to 4 weeks) and performing visual observations at regular intervals.

## Claims

1. A fuel composition comprising a gas oil base fuel, a fatty acid alkyl ester and one or more additional components, each of which components contains one or more aromatic constituents, wherein said additional components are preferably present in the amount of 1 to 50%m of said fuel composition.

2. A fuel composition according to claim 1 wherein said fatty acid alkyl ester is a C₁ to C₅ alkyl ester, preferably a methyl, ethyl, propyl, butyl, preferably methyl, ester, preferably derived from a vegetable oil or animal fat selected from rapeseed oil, soybean oil, coconut oil, sunflower oil, palmolein, palm oil, peanut oil, linseed oil, camelina oil, safflower oil, babassu oil, tallow oil, rice bran oil, jatropha oil and tall oil.

3. A fuel composition according to claim 1 or 2 wherein said one or more additional components are selected from (i) refinery product streams with aromatics contents higher than that of the base fuel and (ii) aromatic solvents, boiling in the normal temperature range of gas oil.

4. A fuel composition according to claim 1, 2 or 3, wherein the gas oil base fuel is a fuel having a density of from 800 to 820 kg/m³ at 15°C (ASTM D4502 or IP 365), a T95 of 285°C or less (ASTM D86 or IP 123) and a kinematic viscosity at 40°C (ASTM D445) from 1.2 to 4.0 mm²/s.

5. A method of reducing the phase separation temperature of a fuel composition comprising a gas oil base fuel and a fatty acid alkyl ester, which method comprises increasing the level of aromatic constituents in the fuel composition, preferably by incorporating in the fuel composition one or more additional components, each of which components contains one or more aromatic constituents.

6. A method according to claim 5 wherein said fatty acid alkyl ester is a C₁ to C₅ alkyl ester, preferably a methyl, ethyl, propyl, butyl, preferably methyl, ester, preferably derived from a vegetable oil animal fat selected from rapeseed oil, soybean oil, coconut oil, sunflower oil, palmolein, palm oil, peanut oil, linseed oil, camelina oil, safflower oil, babassu oil, tallow oil, rice bran oil, jatropha oil and tall oil.

7. A method according to claim 5 or 6 wherein said one or more additional components are selected from (i) refinery product streams with aromatics contents higher than that of the base fuel and (ii) aromatic solvents, boiling in the normal temperature range of gas oil.

8. Use in a fuel composition comprising a gas oil base fuel and a fatty acid alkyl ester of one or more additional components, each of which components contains one or more aromatic constituents, for the purpose of reducing the phase separation temperature of the fuel composition.

9. A method of operating a compression ignition engine and/or a vehicle which is powered by such an engine, which method comprises introducing into a combustion chamber of the engine a fuel composition according to claim 1, 2, 3 or 4.

10. A process for the preparation of a fuel composition which process comprises blending a gas oil base fuel, a fatty acid alkyl ester and one or more additional components, each of which components contains one or more aromatic constituents, wherein said additional components are preferably present in the amount of 1 to 50%m of said fuel composition.
